(19) **Europäisches Patentamt / European Patent Office / Office européen des brevets**

(11) **EP 3 899 580 B1**

(12) **EUROPEAN PATENT SPECIFICATION**

(45) Date of publication and mention
of the grant of the patent:
**18.10.2023 Bulletin 2023/42**

(21) Application number: **18826735.5**

(22) Date of filing: **21.12.2018**

(51) International Patent Classification (IPC):
**G01S 13/08** (2006.01)        **G01S 13/10** (2006.01)
**G01S 13/28** (2006.01)        **G01S 7/02** (2006.01)
**H04L 5/00** (2006.01)        **H04M 1/72403** (2021.01)
**H04M 1/74** (2006.01)        **G01S 13/931** (2020.01)

(52) Cooperative Patent Classification (CPC):
**H04L 5/0062; G01S 7/023; G01S 13/10;**
**H04M 1/72403; H04M 1/74;** G01S 13/288;
G01S 13/931

(86) International application number:
**PCT/EP2018/086737**

(87) International publication number:
**WO 2020/126050 (25.06.2020 Gazette 2020/26)**

(54) **COORDINATION OF WIRELESS COMMUNICATION UNIT AND RADAR UNIT IN A WIRELESS COMMUNICATION NETWORK**

KOORDINATION EINER DRAHTLOSKOMMUNIKATIONSEINHEIT UND RADAREINHEIT IN EINEM DRAHTLOSKOMMUNIKATIONSNETZWERK

COORDINATION D'UNE UNITÉ DE COMMUNICATION SANS FIL ET D'UNE UNITÉ RADAR DANS UN RÉSEAU DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.10.2021 Bulletin 2021/43**

(73) Proprietor: **TELEFONAKTIEBOLAGET LM ERICSSON (PUBL)**
**164 83 Stockholm (SE)**

(72) Inventors:
• **ÅSTRÖM, Magnus**
**224 80 LUND (SE)**
• **LINDOFF, Bengt**
**237 35 BJÄRRED (SE)**

(74) Representative: **Ericsson**
**Patent Development**
**Torshamnsgatan 21-23**
**164 80 Stockholm (SE)**

(56) References cited:
**EP-A1- 1 983 353        US-A1- 2006 223 448**
**US-A1- 2012 281 563        US-A1- 2018 348 340**

EP 3 899 580 B1

**Description**

TECHNICAL FIELD

Embodiments herein relate to a device and method therein. In particular, they relate to how to coordinate operation of a wireless communication unit and a radar unit comprised in the device in a wireless communication network.

BACKGROUND

Low power, low cost radar sensors have been developed and may be used in a number of new devices, such as cars for parking help, autonomous lawn-movers or vacuum cleaners to detect living objects in front of the lawn-movers or vacuum cleaners etc. Usually, 61 GHz Industrial, Scientific and Medical (ISM) band is used for such radar applications and allows for highly accurate distance measurements up to distances of tens of meters.

A mobile device such as a smartphone is an example of a device comprising multiple sensors, e.g., camera, microphone, radio antennae and Global Positioning System (GPS) receivers. Future smartphones or mobile devices may additionally be equipped with, e.g., radar sensors, allowing accurate measurements over a short range, up to a couple of meters. Such radar sensor may or may not be combined with a communications unit such that the unit may be used both for wireless communications and radar applications, since both may operate in the same frequency range, and are composed of similar building blocks. Hence, smart mobile phones make for interesting platforms for sensor fusion applications.

In a device including both a wireless communication unit (WRU) and a radar unit, the wireless communication unit and radar unit may interfere with each other, if they are simultaneously transmitting and receiving. This may distort a distance measurement made by the radar unit as well as a communication attempt made by the WRU.

US 2018/0 348 340 relates to techniques and apparatuses that enable full-duplex operation for radar sensing using a wireless communication chipset. A controller initializes or controls connections between one or more transceivers and antennas in the wireless communication chipset. This enables the wireless communication chipset to be used as a continuous-wave radar or a pulse-Doppler radar. By utilizing these techniques, the wireless communication chipset can be repurposed or used for wireless communication or radar sensing. Radar modulations can also reduce interference with other radar signals or communication signals.

EP 1 983 353 relates to method and a radar system capable of avoiding the interference of a ground based radar interferometric system, with other active services working at a same predetermined frequency band, present in the surrounding area. During a stand-by status, the system awaits a command from the user for starting the acquisition. During a Listen Before Talk (LBT) status, the system verifies the presence of other active systems in its operative band. The presence of other active services is done through a threshold comparison. If the presence is observed of other services, the system interrupts immediately the acquisition, signals the event to the user and returns to the status of stand-by or alternatively, to the status of LBT.

US 2006/0 223 448 relates to a method and system for coordinating radio resources in shared or unlicensed frequency bands. Specifically, a set of operating parameters and a receiver-transmitter feedback mechanism are provided that govern the coordination of radio spectrum usage by a plurality of wireless devices. This is achieved by rewarding good receivers and transmitter behavior and/or restricting radio spectrum occupation time.

US 2012/0 281 563 relates to wireless transmit/receive unit (WTRU) measurements handling to mitigate in-device interference. The method includes establishing a first measurement schedule on a first radio access technology (RAT), and establishing a first transmission schedule for a second RAT. At least one of the first measurement schedule or the first transmission schedule are changed to prevent measurements of the first measurement schedule from occurring contemporaneously with transmissions of the first transmission schedule.

SUMMARY

It is therefore an object of embodiments herein to provide a device and method therein for coordinating operation of a wireless communication unit and a radar unit.

The object is solved by a device according to independent claim 1 and by a method according to independent claim 14. Preferred embodiments thereof are defined by respective dependent claims 2 to 13 and 15 to 18.

The device and method therein according to the embodiments herein enable a radar unit to detect interference and thereby to mitigate the interference or reduce risk of both being exposed to and causing interference. The radar unit obtains information about the interference situation in a frequency range corresponding to a frequency range used for radar pulse transmission. The information about the interference situation may be obtained from the wireless communication unit in the device or determined by the radar unit, for instance using a listen before talk procedure. Making the radar unit aware of communications of the wireless communication unit, the radar unit can determine when to perform a radar transmission for a measurement. In this way, the risk for interference with each other between the wireless communication unit and radar unit is reduced. Further, taking interference situation into consideration when determining a measurement result improves the accuracy of the measurement, and hence more reliable radar measurements are achieved.

Therefore, the embodiments herein provide a device and method therein for coordinating operation of a wireless communication unit and a radar unit.

BRIEF DESCRIPTION OF THE DRAWINGS

Examples of embodiments herein are described in more detail with reference to attached drawings in which:

Figure 1   is a schematic block diagram illustrating a device according to embodiments herein; and

Figure 2   is a flow chart illustrating a method performed in a device according to embodiments herein.

DETAILED DESCRIPTION

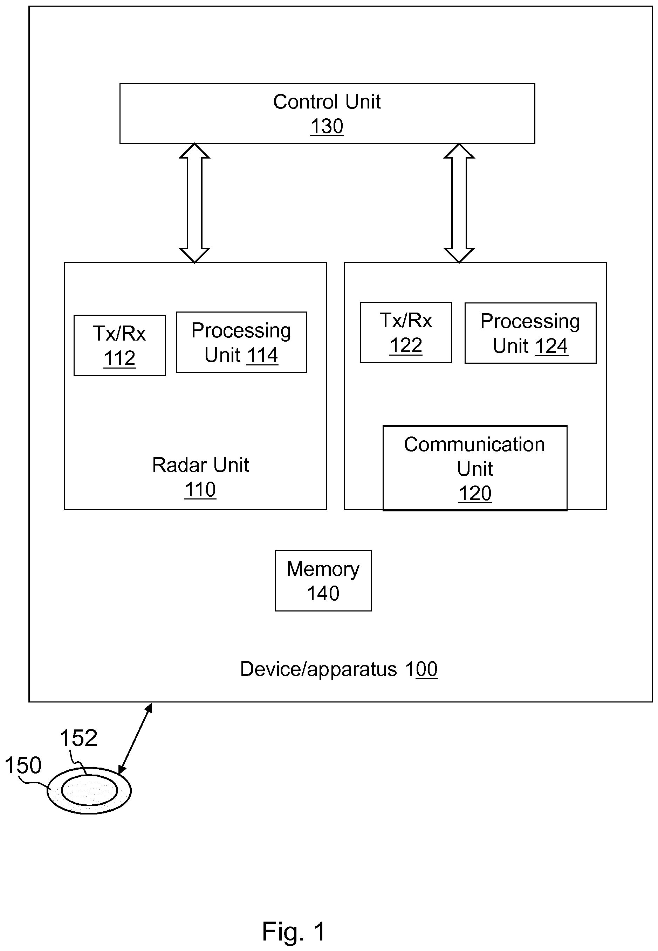

**Figure 1** depicts a block diagram of a device or apparatus **100** according to embodiments herein. The device 100 comprises at least one radar unit **110**, a wireless communication unit (WRU) **120** and a control unit **130.** The control unit 130 enables communication between the radar unit 110 and WRU 120. The WRU 120 comprises a transceiver **Tx/Rx 122** and a processing unit **124** processing received and transmitted signals. The radar unit 110 also comprises a transceiver **Tx/Rx 112** and a processing unit **114** processing transmitted and received radar pulses to obtain measurement results. The device 100 may be any kind of devices comprising both radar sensor and wireless communication unit such as vehicles, smartphones, modems, laptops, tablets, wearable devices, Internet of Things (IoT) devices, eHealth devices, such as wireless heart or breath monitors etc.

The radar unit 110 is configured to transmit radar pulses on a first frequency range. The WRU 120 is configured to operating on a second frequency range. The second frequency range may in some embodiment partly overlap with the first frequency range while in other embodiments it will not overlap. The first frequency range may be a frequency band or a set of frequency bands, a system bandwidth or a bandwidth part, i.e. a part of a system bandwidth. For example, the first frequency range may be any one the ISM frequency bands such as 2.5 GHz, 6 GHz, 5GHz, 24GHz, 61 GHz.

According to the invention, in order to coordinate the operation of the radar unit 110 and the WRU 120 in device 100, the radar unit 110 is configured to obtain information about interference situation on the first frequency range.

The information about the interference situation may be obtained in a number of ways. According some embodiments herein, the radar unit 110 may receive the information about interference situation from the WRU 120 through e.g. the control unit 130.

The WRU 120 may determine possible interference using a listen-before-talk (LBT) procedure. In a LBT procedure, the WRU 120 may measure the interference situation during a configured or pre-defined time period in at least a subset or a part of the first frequency range. The interference situation is typically measured as a received signal strength level and represented by a Received Signal Strength Indication (RSSI) parameter. The RSSI may typically be compared to a threshold. An RSSI above that threshold may imply an ongoing transmission and reception in the WRU 120, and hence no radar pulse should be transmitted. This is because if the WRU 120 is receiving data packet from elsewhere and all of a sudden a radar pulse is transmitted, it is very likely that the data packet will be lost. The RSSI information may be sent to the radar unit 110 via the control unit 130..

In another embodiment, the interference situation on the first frequency range is determined based on a current ongoing transmission in the WRU 120 in the second frequency range. In case the second frequency range does not at least partly overlap with the first frequency range, the interference situation in the first frequency range may be determined based on estimates or mathematical modeling of possible harmonics, intermodulation products, spurious emissions that may be generated in the first frequency range due to non-linearity in the transmitter of the WRU 120. The determination of the interference from the second frequency range to the first frequency range may be performed by the WRU 120, the control unit 130, or the radar unit 110.

The interference situation may for instance be determined based on received signal strength in at least a part of or a subset of the first frequency range. In one embodiment, the direction of the received signal may be used when assessing the LBT such that the LBT is focused in the direction in which the radar measurement will take place. Alternatively, direction information may be included in the information used for determining the interference situation.

So according to some embodiments herein, the radar unit 110 may be configured to perform an LBT procedure in the first frequency range or in at least a subset of the frequency range to obtain the information on interference situation on the first frequency range. The LBT procedure may be performed in a direction in which a radar measurement takes place.

The radar unit 110 then is configured to determine, e.g. by means of the processing unit 114 being configured to, whether the interference situation fulfils a condition. The condition may be a pre-configured or determined criterion or requirement, such as "is interference level lower than...?" or "is a communications activity ongoing?". The condition may be determined from LBT related requirements for the first frequency range. For example, the radar unit performs LBT to check if there is a communications activity ongoing in the first frequency range. In other embodiments the condition may be determined based on receiver performance of the radar unit, such as a sensitivity level of its receiver. For example, if the sensitivity level of the radar receiver is high, the allowed interference level should be lower.

If the interference situation fulfills the condition, the radar unit 110 is further configured to, e.g. by means of the transceiver Tx/Rx 112 being configured to, transmit at least one radar pulse based on the obtained interference situation. The at least one radar pulse may be transmitted without any modification.

In an alternative, the at least one radar pulse may be modified based on the obtained interference situation. For example, if a frequency range in the first frequency range or a subset of the first frequency range is interfered, the radar pulse may be modified such that no energy or reduced energy is emitted in the interfered frequency ranges. This may be performed by some kind of filtering of the radar pulse. For instance, if fast Fourier transform (FFT) based radar pulse generation is used, the sub-carriers corresponding to the interfered frequency range may be nulled and corresponding energy may be applied on non-interfered frequency ranges. If the radar pulse is a pulse with particular good correlation properties, e.g., a Chirp signal Zadoff-Chu sequence, m-sequence or a Gold sequence, these pulses may be either punctured or filtered out in the interfered frequency range, or two separate pulse sequences may be formed, such that one sequence is used below the interfering frequency range and another is used above the interfering frequency range. Alternatively, only one of the frequency ranges either below or above the interfered frequency range may be used, typically the largest one. The corresponding modifications may then be done in the radar receiver.

So according to some embodiments herein, when a frequency range in the first frequency range is interfered, the at least one radar pulse may be modified such that two separate pulse sequences are formed, one pulse sequence used below the interfered frequency range and another used above the interfered frequency range. The radar pulse may be modified such that only one of the frequency ranges either below or above the interfered frequency range is used.

According to some embodiments herein, the at least one radar pulse may be modified such that a signal strength of the radar pulse is below a certain power level based on the received interference level.

According to some embodiments herein, the at least one radar pulse may be modified such that the radar pulse is transmitted in a certain direction based on the direction of the received interference.

The transmission of radar pulse may in some embodiments be less than or as long as the LBT procedure allows transmission, i.e. how long the radar transmission is allowed to be for a given LBT procedure defined by a standard pre-defined rule for the first frequency range. Dwell times depend on which ISM band is used.

For example, 24 GHz band has 4 $\mu$s every 3 ms. The radar unit 110 may be configured to perform further radar transmissions within a valid transmission duration determined based on at least a subset of the first frequency range.

The radar unit 110 is further configured to receive at least one radar pulse response associated to reflections of the at least one transmitted radar pulse and determine at least one measurement result based on the transmitted and received radar pulse.

According to another alternative the measurement result is adapted, adjusted or manipulated based on the obtained interference situation. For instance, the measurement result may be adjusted by a scaling or a bias factor for taking into account a possible interference from another transmission unit such as the WRU 120. This scaling or bias factor may be included in the measurement result itself or in a variance estimate of the measurement. The scaling or bias factor may be a function of any one of:

a. interference level in at least a part of the first frequency range;
b. power spectral density distribution of the interference in at least a part of the first frequency range;
c. direction of the interference.

One way to adapt the measurement result may be to scale based on RSSI level. For instance, if some pulses are interfered more than others, then when doing some average over the measurements, one may scale measurement samples with e.g. a factor of a=0.5, for pulses affected by an interference larger than a threshold, otherwise set scaling factor a=1.

For example, assume a received signal is $r_i = s_i + n_i$, wherein $s_i$ is received signal and $n_i$ is the noise, and if one averages measurement results, then $r^2 = s_i^2 + RSSI$, where $n_i^2 = RSSI$, hence it can be seen a bias factor may be set proportional to RSSI. So when doing average over the measurements, one way may be to set the bias factor to approximate 0 if an RSSI is smaller than a threshold, otherwise set the bias factor to RSSI.

So according to some embodiments herein, individual measurement results, e.g. distances may be weighted differently with a factor depending on RSSI level.

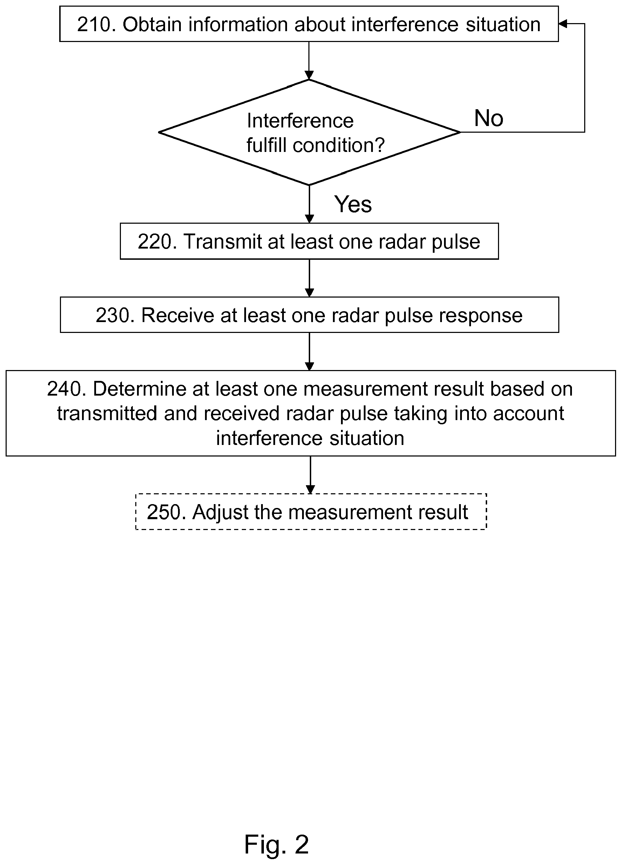

Example of embodiments of a method performed in a device 100 for coordinating operation of a radar unit 110 and a WRU 120 comprised in the device 100 will now be described with reference to **Figure 2**. The method comprises the following actions.

**Action 210**

The radar unit 110 obtains information about interference situation on the first frequency range.

According to some embodiments herein, the radar unit 110 is configured to receive information about the interference situation from the wireless communication unit 120.

The interference situation on the first frequency range may be determined based on a transmission performed by the wireless communication unit 120 in a second frequency range. The interference situation on the first frequency range may be determined based on estimates or mathematical modeling of harmonics, intermodulation products, spurious emissions generated in the first frequency range due to non-linearity in a transmitter of the wireless communication unit 120 transmitting signals in the second frequency range.

The interference situation on the first frequency range may be determined based on direction information in which a radar measurement takes place.

The interference situation on the first frequency range may be determined based on direction information in which the wireless communication unit 120 transmissions take place.

According to some embodiments herein, the radar unit 110 performs an LBT procedure in at least a part of the first frequency range to obtain information about the interference situation on the first frequency range. The LBT procedure may be performed in a direction in which a radar measurement takes place.

The interference situation may be determined based on a received signal strength within at least a subset of the first frequency range.

## Action 220

If the interference situation fulfills a condition, the radar unit 110 transmits at least one radar pulse based on the obtained interference situation.

The condition may be determined based on a listen-before-talk, LBT, related requirement for the first frequency range.

The condition may be determined based on receiving performance of the radar sensor unit.

The at least one radar pulse may be modified based on the obtained interference situation as described in the following:

When a frequency range in the first frequency range is interfered, the radar pulse may be modified such that no energy or reduced energy is emitted in the interfered frequency range.

When a frequency range in the first frequency range is interfered, the radar pulse may be modified such that two separate pulse sequences are formed, one pulse sequence is used below the interfered frequency range and another is used above the interfered frequency range.

When a frequency range in the first frequency range is interfered, the radar pulse may be modified such that only one of the frequency ranges below or above the interfered frequency range is used.

The at least one radar pulse may be modified such that a signal strength of the radar pulse is below a certain power level.

The at least one radar pulse may be modified such that the radar pulse is transmitted in a certain direction.

## Action 230

The radar unit 110 receives at least one radar pulse response associated to reflections of the at least one transmitted radar pulse.

## Action 240

The radar unit 110 determines at least one measurement result based on the transmitted and received radar pulse and taking the interference situation into account.

According to some embodiments herein, the radar unit 110 may further perform the following actions.

## Action 250

The radar unit 110 may adjust the measurement result based on the obtained interference situation. The measurement result may be adjusted by a scaling or a bias factor.

To summarize, the device 100 and method therein according to the embodiments herein enable a radar unit 110 to detect interference and thereby to mitigate the interference or reduce risk of being interfered and causing inference. The radar unit 110 obtains information about the interference situation in a frequency range corresponding to a frequency range used for radar pulse transmission. The information about the interference situation may be obtained from the wireless communication unit 120 comprised in the device 100 or determined by the radar unit itself, for instance using a listen before talk procedure. Making the radar unit 110 aware of communications of the wireless communication unit 120, the radar unit 110 can determine when to perform radar transmission for a measurement. In this way, the risk for interference with each other between the wireless communication unit 120 and radar unit 110 is reduced. Further, taking interference situation into consideration when determining a measurement result improves the accuracy of the measurement, and hence more reliable radar measurements are achieved. By modifying any one of the signal strength, transmitting direction and frequency range of the radar pulse based on the obtained interference situation, interference from the radar unit 110 to the other communication unit 120 may be reduced and the measurement accuracy may be improved further. Furthermore communication performance of the wireless communication unit 120 may be improved since the radar unit will not transmit when the wireless communication unit 120 is active.

Those skilled in the art will appreciate that the control unit 130, the processing unit 114 in the radar unit 110, the processing unit 124 in the communication unit 124 described above in the device 100 may be referred to one circuit/unit, a combination of analog and digital circuits, one or more processors configured with software and/or firmware and/or any other digital hardware performing the function of each circuit/unit. The device 100 may comprises other circuit/units, such as one or more memory units **140** and may be arranged to be used to store received information, measurements, data, configurations and applications to perform the method herein when being executed in the device 100.

The embodiments herein for coordinating operation of the radar unit 110 and the communication unit 120 may be implemented through one or more processors, such as the processing unit 114, 124 or the control unit 130 in the device 100 together with computer program code for performing the functions and actions of the embodiments herein. The program code mentioned above may also be provided as a computer program product, for instance in the form of a data carrier **150** carrying computer program code **152,** as shown in Figure 1, for performing the embodiments herein when being loaded into the device 100. One such carrier may be in the form of a CD ROM disc. It is however feasible with other data carriers such as a memory stick. The computer program code may furthermore be provided as pure program code on a server or a cloud and downloaded to the device 100.

When using the word "comprise" or "comprising" it shall be interpreted as nonlimiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appended claims.

**Claims**

1. A device (100) comprising at least one radar unit (110) configured to transmit radar pulses on a first frequency range and a wireless communication unit (120) configured to operate on a second frequency range, wherein the at least one radar unit (110) comprises a radar transceiver (112) and a radar signal processing unit (114) and is configured to:
obtain information about an interference situation on the first frequency range; coordinate the operation of the radar unit (110) and the wireless communication unit (120) by adjusting a measurement result based on the obtained interference situation and/or modifying at least one radar pulse based on the obtained interference situation, involving:

if the interference situation fulfills a condition, transmit at least one radar pulse based on the obtained interference situation;
receive at least one radar pulse response associated to reflections of the at least one transmitted radar pulse; and
determine at least one measurement result based on the transmitted and received radar pulse.

2. The device (100) according to claim 1, wherein the measurement result is adjusted by a scaling or a bias factor, wherein the scaling or bias factor is a function of any one of:

a) interference level in at least a part of the first frequency range;
b) power spectral density distribution of interference in at least a part of the first frequency range;
c) direction of interference.

3. The device (100) according to any one of claims 1-2, wherein the condition is determined based on a listen-before-talk, LBT, related requirement for the first frequency range.

4. The device (100) according to any one of claims 1-3, wherein the radar unit (110) is configured to receive information about the interference situation from the wireless communication unit, and
wherein the interference situation on the first frequency range is determined based on a transmission performed by the wireless communication unit in a second frequency range.

5. The device (100) according to any one of claims 1-4, wherein the interference situation on the first frequency range is determined based on estimates or mathematical modeling of harmonics, intermodulation products, spurious emissions generated in the first frequency range due to non-linearity in a transmitter of the wireless communication unit transmitting signals in the second frequency range.

6. The device (100) according to any one of claims 1-5, wherein the interference situation on the first frequency range is determined based on direction information in which a radar measurement takes place, or
wherein the interference situation on the first frequency range is determined based on direction information in which the wireless communication unit transmissions take place.

7. The device (100) according to any one of claims 1-3, wherein the radar unit is configured to perform a LBT procedure in at least a part of the first frequency range to obtain information about interference situation on the first frequency range.

8. The device (100) according to claim 7, wherein the radar unit is configured to perform further radar transmissions within a valid transmission duration determined based on at least a subset of the first frequency range.

9. The device (100) according to claim 1, wherein when a frequency range in the first frequency range is interfered, the radar pulse is modified such that two separate pulse sequences are formed, one pulse sequence used below the interfered frequency range and another used above the interfered frequency range.

10. The device (100) according to claim 1, wherein when a frequency range in the first frequency range is interfered, the at least one radar pulse is modified such that only one of the frequency ranges below or above the interfered frequency range is used.

11. The device according to claim 1, wherein the at least one radar pulse is modified such that a signal strength of the at least one radar pulse is below a certain power level.

12. The device according to claim 1, wherein the at least one radar pulse is modified such that the radar pulse is transmitted in a certain direction.

13. The device according to any one of claims 1-12, wherein the first frequency range is a 61 GHz Industrial, Scientific and Medical, ISM, band.

14. A method performed in a device (100) for coordinating operation of a radar unit (110) and a wireless communication unit (120) comprised in the device (100), wherein the radar unit (110) is configured to transmit radar pulses on a first frequency range and the wireless communication unit (120) is configured to operating on a second frequency range, the method comprising:

obtaining (210) information about interference situation on the first frequency range for the radar unit (110);
coordinating the operation of the radar unit (110) and the wireless communication unit (120) by adjusting a measurement result based on the obtained interference situation and/or modifying at least one radar pulse based on the obtained interference situation, involving:

if the interference situation fulfills a condition,
transmitting (220) by the radar unit (110) at least one radar pulse based on the obtained interference situation;
receiving (230) by the radar unit (110) at least one radar pulse response associated to reflections of the at least one transmitted radar pulse; and
determining (240) at least one measurement result based on the transmitted and received radar pulse.

15. The method according to claim 14, wherein the condition is determined based on a listen-before-talk, LBT, related requirement for the first frequency range or based on receiver performance of the radar unit.

16. The method according to any one of claims 14-15, wherein the interference situation on the first frequency range is determined based on a transmission performed by the wireless communication unit in a second frequency range.

17. The method according to any one of claims 14-16, wherein the interference situation on the first frequency range is determined based on direction information in which a radar measurement takes place, or
wherein the interference situation on the first frequency range is determined based on direction information in which the wireless communication unit transmissions take place.

18. The method according to any one of claims 14-15, wherein the radar unit is configured to perform a LBT procedure in at least a part of the first frequency range to obtain information about interference situation on the first frequency range.

**Patentansprüche**

1. Vorrichtung (100), umfassend mindestens eine Radareinheit (110), die konfiguriert ist, um Radarimpulse in einem ersten Frequenzbereich zu übertragen, und eine Drahtloskommunikationseinheit (120), die konfiguriert ist, um in einem zweiten Frequenzbereich zu arbeiten, wobei die mindestens eine Radareinheit (110) einen Radarsendeempfänger (112) und eine Radarsignalverarbeitungseinheit (114) umfasst und zu Folgendem konfiguriert ist:

Erhalten von Informationen über eine Interferenzsituation in dem ersten Frequenzbereich;
Koordinieren des Betriebs der Radareinheit (110) und der Drahtloskommunikationseinheit (120), indem ein Messergebnis basierend auf der erhaltenen Interferenzsituation eingestellt und/oder mindestens ein Radarimpuls basierend auf der erhaltenen Interferenzsituation modifiziert wird, involvierend:

wenn die Interferenzsituation eine Bedingung erfüllt,
Übertragen von mindestens einem Radarimpuls basierend auf der erhaltenen Interferenzsituation;
Empfangen von mindestens einer Radarimpulsantwort verbunden mit Reflexionen des mindestens einen übertragenen Radarimpulses; und
Bestimmen von mindestens einem Messergebnis basierend auf dem übertragenen und empfangenen Radarimpuls.

2. Vorrichtung (100) nach Anspruch 1, wobei das Messergebnis um einen Skalier- oder einen Bias-Faktor eingestellt wird, wobei der Skalier- oder Bias-Faktor von einem beliebigen des Folgenden abhängig ist:

a) Interferenzniveau in mindestens einem Teil des ersten Frequenzbereichs;
b) Leistungsspektraldichteverteilung von Interferenz in mindestens einem Teil des ersten Frequenzbereichs;
c) Interferenzrichtung.

3. Vorrichtung (100) nach einem der Ansprüche 1 bis 2, wobei die Bedingung basierend auf einem Listen-before-Talk, LBT-bezogenen Erfordernis für den ersten Frequenzbereich bestimmt wird.

4. Vorrichtung (100) nach einem der Ansprüche 1 bis 3, wobei die Radareinheit (110) konfiguriert ist, um Informationen über die Interferenzsituation von der Drahtloskommunikationseinheit zu empfangen, und wobei die Interferenzsituation in dem ersten Frequenzbereich basierend auf einer Übertragung bestimmt wird, die durch die Drahtloskommunikationseinheit in einem zweiten Frequenzbereich durchgeführt wird.

5. Vorrichtung (100) nach einem der Ansprüche 1 bis 4, wobei die Interferenzsituation in dem ersten Frequenzbereich basierend auf Schätzungen oder mathematischer Modellierung von Oberwellen, Intermodulationsprodukten, unechten Emissionen, die in dem ersten Frequenzbereich aufgrund von Nichtlinearität in einem Sender der Drahtloskommunikationseinheit erzeugt werden, der Signale in dem zweiten Frequenzbereich überträgt, bestimmt wird.

6. Vorrichtung (100) nach einem der Ansprüche 1 bis 5, wobei die Interferenzsituation in dem ersten Frequenzbereich basierend auf Richtungsinformationen bestimmt wird, in denen eine Radarmessung stattfindet, oder
wobei die Interferenzsituation in dem ersten Frequenzbereich basierend auf Richtungsinformationen bestimmt wird, in denen die Drahtloskommunikationseinheitsübertragungen stattfinden.

7. Vorrichtung (100) nach einem der Ansprüche 1 bis 3, wobei die Radareinheit konfiguriert ist, um einen LBT-Vorgang in mindestens einem Teil des ersten Frequenzbereichs durchzuführen, um Informationen über Interferenzsituation in dem ersten Frequenzbereich zu erhalten.

8. Vorrichtung (100) nach Anspruch 7, wobei die Radareinheit konfiguriert ist, um weitere Radarübertragungen innerhalb einer gültigen Übertragungsdauer durchzuführen, die basierend auf mindestens einem Teilsatz des ersten Frequenzbereichs bestimmt wird.

9. Vorrichtung (100) nach Anspruch 1, wobei, wenn ein Frequenzbereich in dem ersten Frequenzbereich gestört wird, der Radarimpuls modifiziert wird, sodass zwei separate Impulssequenzen gebildet werden, wobei eine Impulssequenz unter dem gestörten Frequenzbereich verwendet wird und eine andere über dem gestörten Frequenzbereich verwendet wird.

10. Vorrichtung (100) nach Anspruch 1, wobei, wenn ein Frequenzbereich in dem ersten Frequenzbereich gestört wird, der mindestens eine Radarimpuls modifiziert wird, sodass nur einer der Frequenzbereiche unter oder über dem gestörten Frequenzbereich verwendet wird.

11. Vorrichtung nach Anspruch 1, wobei der mindestens eine Radarimpuls modifiziert wird, sodass eine Signalstärke des mindestens einen Radarimpulses unter einem bestimmten Leistungsniveau ist.

12. Vorrichtung nach Anspruch 1, wobei der mindestens eine Radarimpuls modifiziert wird, sodass der Radarimpuls in einer bestimmten Richtung übertragen wird.

13. Vorrichtung nach einem der Ansprüche 1 bis 12, wobei der erste Frequenzbereich ein Industrial, Scientific and Medical, ISM-Band, mit 61 GHz ist.

14. Verfahren, durchgeführt in einer Vorrichtung (100) zum Koordinieren von Betrieb einer Radareinheit (110) und einer Drahtloskommunikationseinheit (120), die in der Vorrichtung (100) umfasst sind, wobei die Radareinheit (110) konfiguriert ist, um Radarimpulse in einem ersten Frequenzbereich zu übertragen und die Drahtloskommunikationseinheit (120) konfiguriert ist, um in einem zweiten Frequenzbereich zu arbeiten, wobei das Verfahren Folgendes umfasst:

*Erhalten* (210) von Informationen über Interferenzsituation in dem ersten Frequenzbereich für die Radareinheit (110);

*Koordinieren* des Betriebs der Radareinheit (110) und der Drahtloskommunikationseinheit (120), indem ein Messergebnis basierend auf der erhaltenen Interferenzsituation eingestellt und/oder mindestens ein Radarimpuls basierend auf der erhaltenen Interferenzsituation modifiziert wird, involvierend:

wenn die Interferenzsituation eine Bedingung erfüllt,

*Übertragen* (220), durch die Radareinheit (110), von mindestens einem Radarimpuls basierend auf der erhaltenen Interferenzsituation;

*Empfangen* (230), durch die Radareinheit (110), von mindestens einer Radarimpulsantwort verbunden mit Reflexionen des mindestens einen übertragenen Radarimpulses; und

*Bestimmen* (240) von mindestens einem Messergebnis basierend auf dem übertragenen und empfangenen Radarimpuls.

15. Verfahren nach Anspruch 14, wobei die Bedingung basierend auf einem Listen-before-Talk, LBT-bezogenen Erfordernis für den ersten Frequenzbereich oder basierend auf Empfängerleistung der Radareinheit bestimmt wird.

16. Verfahren nach einem der Ansprüche 14 bis 15, wobei die Interferenzsituation in dem ersten Frequenzbereich basierend auf einer Übertragung bestimmt wird, die durch die Drahtloskommunikationseinheit in einem zweiten Frequenzbereich durchgeführt wird.

17. Verfahren nach einem der Ansprüche 14 bis 16, wobei die Interferenzsituation in dem ersten Frequenzbereich basierend auf Richtungsinformationen bestimmt wird, in denen eine Radarmessung stattfindet, oder
wobei die Interferenzsituation in dem ersten Frequenzbereich basierend auf Richtungsinformationen bestimmt wird, in denen die Drahtloskommunikationseinheitsübertragungen stattfinden.

18. Verfahren nach einem der Ansprüche 14 bis 15, wobei die Radareinheit konfiguriert ist, um einen LBT-Vorgang in mindestens einem Teil des ersten Frequenzbereichs durchzuführen, um Informationen über Interferenzsituation in dem ersten Frequenzbereich zu erhalten.

## Revendications

1. Dispositif (100) comprenant au moins une unité radar (110) configurée pour transmettre des impulsions radar sur une première plage de fréquences et une unité de communication sans fil (120) configurée pour fonctionner sur une seconde plage de fréquences, dans lequel la au moins une unité radar (110) comprend un émetteur-récepteur radar (112) et une unité de traitement de signal radar (114) et est configuré pour :

obtenir des informations sur une situation d'interférence sur la première gamme de fréquences ;
coordonner le fonctionnement de l'unité radar (110) et de l'unité de communication sans fil (120) en ajustant un résultat de mesure en fonction de la situation d'interférence obtenue et/ou en modifiant au moins une impulsion radar en fonction de la situation d'interférence obtenue, impliquant :

dans le cas où la situation de brouillage remplit une condition,
transmettre au moins une impulsion radar sur la base de la situation d'interférence obtenue ;
recevoir au moins une réponse d'impulsion radar associée aux réflexions de la au moins une impulsion radar émise ; et
déterminer au moins un résultat de mesure sur la base de l'impulsion radar émise et reçue.

2. Dispositif (100) selon la revendication 1, dans lequel le résultat de mesure est ajusté par une mise à l'échelle ou un facteur de biais, dans lequel le facteur de mise à l'échelle ou de biais est une fonction de l'un quelconque de :

a) niveau d'interférence dans au moins une partie de la première gamme de fréquences ;
b) distribution de densité spectrale de puissance d'interférence dans au moins une partie de la première gamme de fréquences ;
c) direction des interférences.

3. Dispositif (100) selon l'une quelconque des revendications 1 à 2, dans lequel la condition est déterminée sur la base d'une exigence liée à l'écoute avant la conversation, LBT, pour la première gamme de fréquences.

4. Dispositif (100) selon l'une quelconque des revendications 1 à 3, dans lequel l'unité radar (110) est configurée pour recevoir des informations sur la situation d'interférence de l'unité de communication sans fil, et
dans lequel la situation d'interférence sur la première gamme de fréquences est déterminée sur la base d'une transmission effectuée par l'unité de communication sans fil dans une seconde gamme de fréquences.

**5.** Dispositif (100) selon l'une quelconque des revendications 1 à 4, dans lequel la situation d'interférence sur la première gamme de fréquences est déterminée sur la base d'estimations ou d'une modélisation mathématique d'harmoniques, de produits d'intermodulation, d'émissions parasites générées dans la première gamme de fréquences en raison de non linéarité dans un émetteur de l'unité de communication sans fil transmettant des signaux dans la seconde gamme de fréquences.

**6.** Dispositif (100) selon l'une quelconque des revendications 1 à 5, dans lequel la situation d'interférence sur la première gamme de fréquences est déterminée sur la base d'informations de direction dans lesquelles une mesure radar a lieu, ou
dans lequel la situation d'interférence sur la première gamme de fréquences est déterminée sur la base d'informations de direction dans lesquelles les transmissions de l'unité de communication sans fil ont lieu.

**7.** Dispositif (100) selon l'une quelconque des revendications 1 à 3, dans lequel l'unité radar est configurée pour exécuter une procédure LBT dans au moins une partie de la première gamme de fréquences pour obtenir des informations sur la situation d'interférence sur la première gamme de fréquences.

**8.** Dispositif (100) selon la revendication 7, dans lequel l'unité radar est configurée pour effectuer d'autres transmissions radar dans une durée de transmission valide déterminée sur la base d'au moins un sous-ensemble de la première gamme de fréquences.

**9.** Dispositif (100) selon la revendication 1, dans lequel lorsqu'une plage de fréquences dans la première plage de fréquences est brouillée, l'impulsion radar est modifiée de sorte que deux séquences d'impulsions séparées sont formées, une séquence d'impulsions utilisée en dessous de la plage de fréquences brouillées et une autre utilisée au-dessus, la plage de fréquences brouillées.

**10.** Dispositif (100) selon la revendication 1, dans lequel lorsqu'une plage de fréquences dans la première plage de fréquences est brouillée, l'au moins une impulsion radar est modifiée de sorte qu'une seule des plages de fréquences inférieures ou supérieures à la plage de fréquences brouillées est utilisée.

**11.** Dispositif selon la revendication 1, dans lequel l'au moins une impulsion radar est modifiée de sorte qu'une intensité de signal de la au moins une impulsion radar est inférieure à un certain niveau de puissance.

**12.** Dispositif selon la revendication 1, dans lequel l'au moins une impulsion radar est modifiée de sorte que l'impulsion radar est transmise dans une certaine direction.

**13.** Dispositif selon l'une quelconque des revendications 1 à 12, dans lequel la première plage de fréquences est une bande ISM industrielle, scientifique et médicale de 61 GHz.

**14.** Procédé exécuté dans un dispositif (100) pour coordonner le fonctionnement d'une unité radar (110) et d'une unité de communication sans fil (120) comprise dans le dispositif (100), dans lequel l'unité radar (110) est configurée pour transmettre des impulsions radar sur un première gamme de fréquences et l'unité de communication sans fil (120) est configurée pour fonctionner sur une seconde gamme de fréquences, le procédé comprenant :

l'obtention (210) des informations sur la situation d'interférence sur la première gamme de fréquences pour l'unité radar (110) ;
la coordination du fonctionnement de l'unité radar (110) et de l'unité de communication sans fil (120) en ajustant un résultat de mesure sur la base de la situation d'interférence obtenue et/ou la modification de l'au moins une impulsion radar en fonction de la situation de brouillage obtenue, impliquant :

dans le cas où la situation de brouillage remplit une condition,
la transmission (220) par l'unité radar (110) d'au moins une impulsion radar sur la base de la situation d'interférence obtenue ;
la réception (230) par l'unité radar (110) d'au moins une réponse d'impulsion radar associée aux réflexions de la au moins une impulsion radar émise ; et
la détermination (240) d'au moins un résultat de mesure sur la base de l'impulsion radar émise et reçue.

**15.** Procédé selon la revendication 14, dans lequel la condition est déterminée sur la base d'une exigence liée à l'écoute avant conversation, LBT, pour la première gamme de fréquences ou sur la base des performances de récepteur de l'unité radar.

**16.** Procédé selon l'une quelconque des revendications 14 à 15, dans lequel la situation d'interférence sur la première gamme de fréquences est déterminée sur la base d'une transmission effectuée par l'unité de communication sans fil dans une seconde gamme de fréquences.

17. Procédé selon l'une quelconque des revendications 14 à 16, dans lequel la situation d'interférence sur la première gamme de fréquences est déterminée sur la base d'informations de direction dans lesquelles une mesure radar a lieu, ou dans lequel la situation d'interférence sur la première gamme de fréquences est déterminée sur la base d'informations de direction dans lesquelles les transmissions de l'unité de communication sans fil ont lieu.

18. Procédé selon l'une quelconque des revendications 14 à 15, dans lequel l'unité radar est configurée pour exécuter une procédure LBT dans au moins une partie de la première gamme de fréquences pour obtenir des informations sur la situation d'interférence sur la première gamme de fréquences.

Control Unit
130

Tx/Rx
112

Processing
Unit 114

Radar Unit
110

Tx/Rx
122

Processing
Unit 124

Communication
Unit
120

Memory
140

Device/apparatus 100

152

150

Fig. 1

210. Obtain information about interference situation

Interference fulfill condition?

No

Yes

220. Transmit at least one radar pulse

230. Receive at least one radar pulse response

240. Determine at least one measurement result based on transmitted and received radar pulse taking into account interference situation

250. Adjust the measurement result

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180348340 A
- EP 1983353 A
- US 20060223448 A
- US 20120281563 A